# EUROPEAN PATENT APPLICATION

(11) **EP 4 354 792 A1**
(43) Date of publication of application: **17.04.2024**
(21) Application number: 22275131.5
(22) Date of filing: 11.10.2022
(51) Int. Cl.: H04L 9/08, G06F 21/72

(54) **A DEVICE AND A METHOD FOR PERFORMING A CRYPTOGRAPHIC OPERATION**

(71) Applicant: nCipher Security Limited, Cambridge CB1 2GA (GB)
(72) Inventor: EVES, Daniel Patrick, Cambridge, CB1 2GA (GB)
(74) Representative: Marks & Clerk LLP

(57) **Abstract**

A device, comprising:
an input; and
a plurality of processing modules, the plurality of processing modules comprising a first processing module and a second processing module, the device being configured to:
responsive to a first command received through the input, execute, on the first processing module, a cryptographic operation corresponding to the first command;
responsive to a second command received through the input, execute, on the second processing module, a cryptographic operation corresponding to the second command.

## Description

### Field

The present invention relates to a device and a method for performing a cryptographic operation. For example, the device may be a hardware security module device.

### Background

Various devices may be used to perform cryptographic operations. For example, a hardware security module (HSM) is a device that is configured to securely store and manage cryptographic keys, and perform a set of cryptographic functions. A HSM may comprise both physical and non-physical properties that provide security. Non-physical security properties can include the use of encryption, i.e. the inclusion in the device of software or a physical component to perform encryption of the stored data. Physical security properties can include tamper switches triggered by physical access, and a tamper proof membrane surrounding the physical boundary of the device for example.

Various service providers aim to provide computer implemented services to a large number of users. An example of this is cloud service providers, CSPs, who offer products such as "software as a service" (SaaS) or storage on demand. Use of a service provider hosted computer implemented service allows users to reduce the administrative overhead of hosting such services themselves. Cryptographic services which are hosted by a service provider may use a "single-tenant" solution, deploying a dedicated HSM device per user. This can result in inefficient use of the HSM resources, since each user may not require all of the resources provided by an entire HSM device. Provision of a multi-tenant solution however, in which multiple users use the same HSM device, can introduce a security vulnerability.

### Brief Description of the Figures

Devices and methods in accordance with non-limiting embodiments will now be described with reference to the accompanying figures in which:
Figure 1 is a schematic illustration of system comprising a hardware security module (HSM) in accordance with a comparative example;
Figure 2 is a schematic illustration of the system of Figure 1 in use;
Figure 3 is a schematic illustration of two containers running on the HSM device of Figure 1;
Figure 4 is a schematic illustration of a system comprising a hardware security module in accordance with an embodiment;
Figure 5 is a schematic illustration of the system of Figure 4 in use;
Figure 6 is a schematic illustration of two containers running on the HSM device of Figure 4;
Figure 7 shows a flow chart of a method of communication using a hardware security module device in accordance with an embodiment;
Figure 8 shows a schematic illustration of two virtual machines running on the HSM device of Figure 4.

### Detailed Description

According to a first aspect, there is provided a device, comprising:
an input; and
a plurality of processing modules, the plurality of processing modules comprising a first processing module and a second processing module, the device being configured to:
   responsive to a first command received through the input, execute, on the first processing module, a cryptographic operation corresponding to the first command;
   responsive to a second command received through the input, execute, on the second processing module, a cryptographic operation corresponding to the second command.

In one example, the device is further configured to identify the first request as corresponding to a first user and identify the second request as corresponding to a second user.

In one example, the device is further configured to:
responsive to a first request received through the input, run a first isolated environment on the first processing module and responsive to the first command, execute the cryptographic operation corresponding to the first command in the first isolated environment;
responsive to a second request received through the input, run a second isolated environment on the second processing module and responsive to the second command, execute the cryptographic operation corresponding to the second command in the second isolated environment.

In one example, the device is further configured to:
establish a first secure connection with the first user in the first isolated environment and execute the operation corresponding to the first command responsive to receiving the first command over the first secure connection;
establish a second secure connection with the second user in the second isolated environment and execute the operation corresponding to the second command responsive to receiving the second command over the second secure connection.

In one example, the device is further configured to receive a representation of computer program code that embodies a cryptographic algorithm, and wherein the operation corresponding to the second command comprises executing the program.

In one example, the first processing module is an integrated circuit and the second processing module is an integrated circuit.

In one example, the first processing module comprises a microprocessor and a random access memory (RAM) and the second processing module comprises a microprocessor and a random access memory (RAM).

In one example, at least one of the first processing module or the second processing module comprises a field-programmable gate array FPGA or an application specific integrated circuit ASIC, and wherein at least one cryptographic operation is implemented directly in hardware in the ASIC or FPGA.

In one example, the device further comprises a non-volatile memory component, wherein the plurality of processing modules are configured to access the non-volatile memory component.

In one example, the device further comprises a third processing module, wherein the third processing module is configured as a management processing module.

In one example, the third processing module is in wired bi-directional communication with the non-volatile memory component, and wherein the other processing modules of the plurality of processing modules access the non-volatile memory component through the third processing module.

In one example, the first processing module and the second processing module use a Reduced Instruction Set Computer RISC microprocessor architecture.

In one example the first processing module and the second processing module comprise a system on a chip.

According to another aspect there is provided a method for performing a cryptographic operation on a device, the device comprising a plurality of processing modules, the plurality of processing modules comprising a first processing module and a second processing module, the method comprising:
responsive to a first command received through the input, executing, on the first processing module, a cryptographic operation corresponding to the first command;
responsive to a second command received through the input, executing, on the second processing module, a cryptographic operation corresponding to the second command.

According to another aspect there is provided a carrier medium comprising computer readable code configured to cause a computer to perform the method.

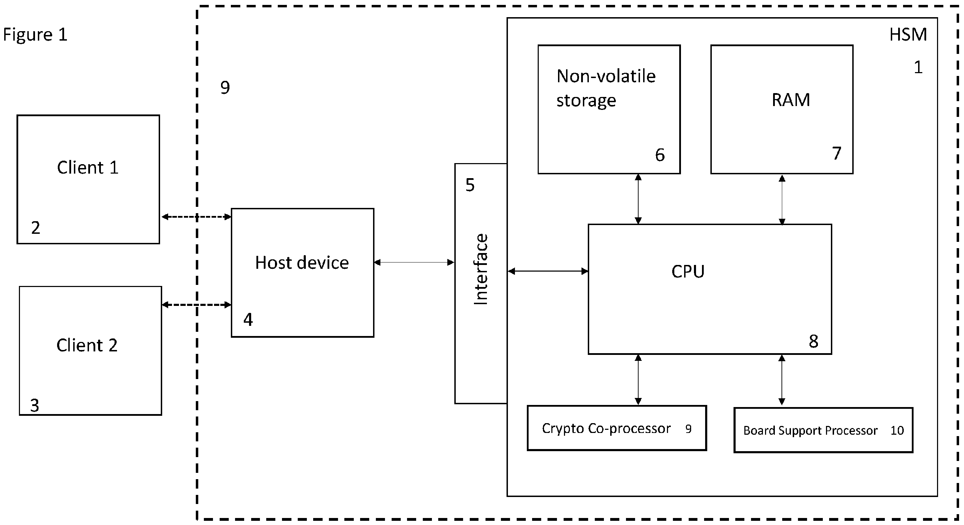

Figure 1 is a schematic illustration of system comprising a hardware security module (HSM) 1 in accordance with a comparative example. The figure shows a hardware security module 1 which can be used to perform one or more cryptographic functions for multiple clients. The term client is used throughout the description to refer generally to a user of the HSM device 1. The user may also be referred to as a "tenant".

The HSM device 1 is located in a host system 9. The host system 9 may be a service provider system for example. The HSM 1 is communicatively coupled to a computer or server device in the host system, referred to here as a host device 4, via host interface 5.

A first client device 2, which is separate to the host system 9, is located remotely from the host system 9. The first client device 2 is communicatively coupled to the host device 4 in the host system 9, and thus is communicatively coupled to the HSM device 1 through the host device 4. A second client device 3, which is separate to the host system 9 and the first client device 2, is also located remotely from the host system 9 and is located remotely from the first client device 2. The second client device 3 is communicatively coupled to the host device 4 in the host system 9, and thus is communicatively coupled to the HSM device 1 through the host device 4.

The HSM 1 comprises a central processing unit (CPU) 8. The CPU 8 comprises logic circuitry that responds to and processes computer program instructions in code stored in the working memory. The CPU 8 may be an NXP T1042 processor, comprising four e550 PPC cores, for example.

The working memory includes the RAM 7. When executed, a program is represented as a software product, or process, stored in the working memory. A "core program" is referred to in the below description. The core program comprises computer instructions embodying a set of one or more cryptographic functions. For example, the core program comprises computer instructions embodying one or more of the following cryptographic functions: cryptographic key generation; cryptographic key derivation; encryption; decryption; and digital signature functions (for example digital signing or validation of a digital signature).

The HSM device 1 further comprises a board support processor 10, configured to communicate with a plurality of on-board sensors, monitoring the operation and security of the CPU 8 and the other hardware components of the hardware security module 1.

The HSM device 1 further comprises a crypto co-processor 9. The crypto co-processor 9 performs specific cryptographic operations in hardware. Requests for performance of an operation are passed from the CPU 8, and the crypto co-processor 9 returns to the CPU 8 a response to the request.

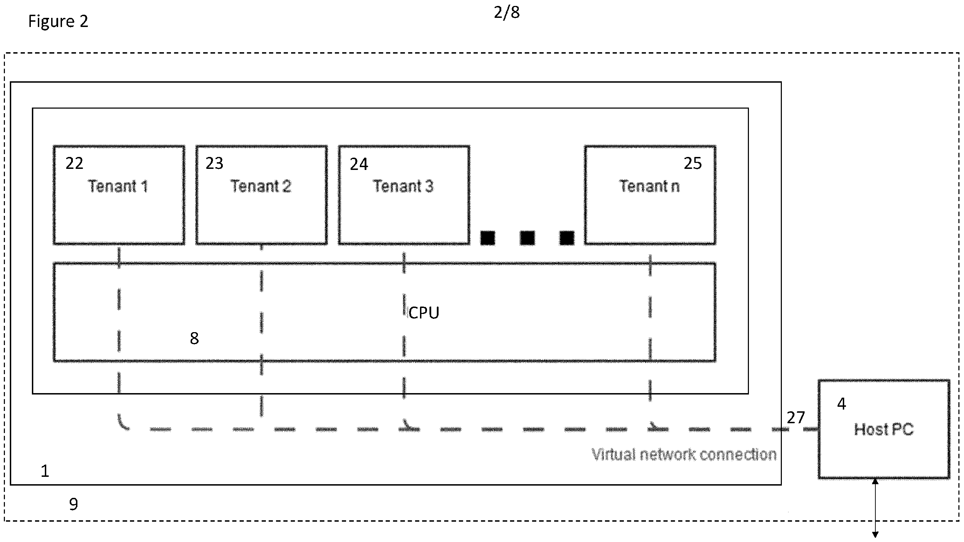

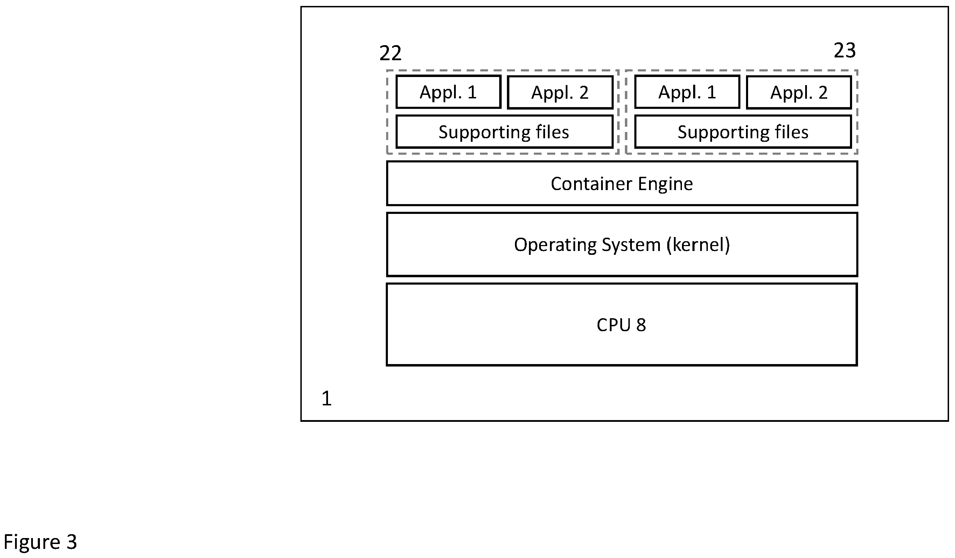

Figure 2 is a schematic illustration of the system in use. As illustrated, multiple containers 22 to 25 are running on the HSM device 1, with each container being associated with a different client. In particular, a first container 22 is associated with a first client "Tenant 1". The first client "Tenant 1" uses the first client device 2. A second container 23 is associated with a second client "Tenant 2", and so on. Each container comprises a set of one or more processes that are isolated from the rest of the system. A schematic illustration of two of the containers running on the HSM device 1 is also shown in Figure 3. The figure shows the operating system kernel running on the CPU 8, the container engine, and the first container 22 and second container 23 that share the operating system kernel. The first container 22 comprises application 1, application 2 and the supporting files for these applications. The second container 23 comprises application 1, application 2 and the supporting files for these applications.

When the first client wishes to use the HSM device 1, a request is sent from the first client device 2 to the host device 4. The host device 4 sends a request to the HSM device 1. The container engine running on the HSM device 1 launches the first container 22. The container engine retrieves a container image from the non-volatile storage 6, then makes one or more API calls to the operating system kernel. The kernel implements the isolation of the first container 22, and enforces the network connections available to the first container 22. The kernel, together with the memory management unit within the CPU 8, allocates part of the RAM 7 to the first container 22.

A network address of the first container 22 is then transmitted to the client device 2. In this manner, communication can be established by the client device 2 with the first container 22 through the host device 4 using the network address of the first container 22. A secure connection may be established between the client device 12 and the first container 22. The secure connection is established by a secure connection process running in the first container 22, and a secure connection process running on the client device 2. The secure connection may be established using the SSH protocol. Data is exchanged between the client device 2 and the first container 22 running in the HSM 1 via a host device 4, using a virtual network connection between the host device 4 and the first container 22.

Once the first container 22 is running and the secure connection established, requests are sent from the client system 2. The requests correspond to performance of one or more cryptographic functions such as: cryptographic key generation; cryptographic key derivation; encryption; decryption and digital signature functions (for example digital signing or validation of a digital signature). The HSM device 1 runs the core program process inside the client container 22, which executes the commands given to it by the client.

In some scenarios, as well as sending requests to perform functionality provided by the core program, users are also able to provide code to the HSM device 1 embodying functionality which is not provided by the core program. The HSM device 1 will then execute the user code, optionally subject to some security checks, within the user container 22, or within a second container associated with the same user.

The HSM device 1 uses software boundaries to separate shared hardware resources between users, so as to mitigate against possible attempts by the mutually untrusted tenants to obtain each other's secret information. In the example of Figure 2, the software boundaries are implemented using containers. Alternative examples may use virtual machines for example. The HSM device 1 comprises a single processor 8, and uses software boundaries to separate hardware resources between users, and mitigate against mutually untrusted tenants obtaining each other's secret information.

However, underlying hardware resources including the CPU 8 are shared between users. As has been described above, in some scenarios, users are able to provide code to the HSM device 1. Since the CPU 8 is shared between users, a malicious user could attempt to provide code that gains information from another user, or prevents their operations being correctly executed using a mirco-architectural attack, for example by making use of cache-timing attacks.

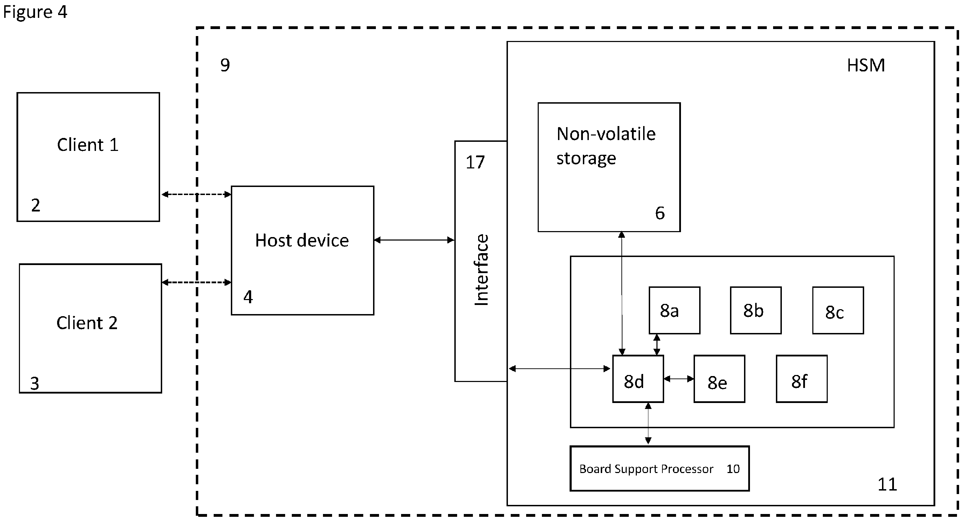

Figure 4 is a schematic illustration of a system comprising a hardware security module 11 in accordance with an embodiment. The HSM 11 can be used for secure processing of cryptographic keys where multiple mutually untrusted users are to share the same HSM 11, in other words a multi-tenancy implementation.

The HSM device 11 is located in a host system 9, for example a service provider system. The HSM 11 is communicatively coupled to a host computing device 4, such as a general purpose computer or a server device 4 in the host system, via host interface 17. For example, the HSM device 11 may be a PCI-express card, directly plugged in to a PCI-express card slot of the host device 4. Alternatively, the HSM device 11 can be coupled by a USB connection for example. The host system 9 may comprise a large number of HSM devices coupled to the host computing device 4. In some examples, instead of a general purpose computer or server, the host device 4 may comprise a router, or a combined router and firewall. In some examples, instead of a PCIe connection, the host device 4 may be Ethernet connected to the HSM 11 for example.

In this example, a first client system 2, which is separate to the host system 9, is located remotely from the host system 9. The first client system 2 comprises a general purpose computer device or server device for example. The first client system 2 is communicatively coupled to the host device 4 in the host system 9, and thus is communicatively coupled to the HSM device 11 through the host device 4. Communication between the first client system 2 and the host system 9 is performed over a communication network. Communication between the first client system 2 and the host system 9 may be performed via an Internet connection for example. A second client system 3, which is separate to the host system 9, is located remotely from the host system 9 and the first client system 2. The second client system 3 comprises a general purpose computer device or server device for example. The second client system 3 is communicatively coupled to the host device 4 in the host system 9, and thus is communicatively coupled to the HSM device 11 through the computer or server device 4 in the host system 9. Communication between the second client system 3 and the host system 9 is performed over a communication network. Communication between the second client system 3 and the host system 9 may be performed via an Internet connection for example. It is to be understood that one, two, or more than two clients can use the HSM device 11 at one time. Furthermore, in some alternative examples, there is no host device 4, and one or more client devices connect directly to the HSM 11.

The HSM 11 comprises multiple processing modules 8a to 8f. In this example, six processing modules are shown, however it is to be understood that two or more processing modules are included in the HSM 11. For example, a large number of processing modules may be included, such as greater than 10, greater than 50, or greater than 100. Each processing module 8a to 8f comprises a processor.

In one example, each processing module 8a to 8f is a chip or integrated circuit, comprising a set of electronic circuits on a single piece of semiconductor material. For example, each processing module is a system on a chip (SoC). For example, the HSM device may be a PCI-express card, with multiple processor chips 8a to 8f mounted on the PCI-express board. In one example, each processing module 8a to 8f is an NXP i.MX 8M Mini SoloLite, which comprises an Arm Cortex-A53 core. In some examples, the processor may comprise multiple processing cores. For example, each processing module 8a to 8f may be an NXP i.MX 8M Mini Quad, which is a quad core implementation comprising Arm Cortex-A53 cores. The processing module may comprise an FPGA. For example, each processing module 8a to 8f may be a Xilinx Zynq-7000 System on a Chip (SoC). Different components may be used for different processing modules, for example one or more of the processing modules 8a to 8f may comprise a single core processor, and one or more of the other processing modules 8a to 8f may comprise a multi-core processor.

One or more of the processing modules 8a to 8f may be commodity processors, for example of the type used in embedded devices such as mobile devices or set top boxes. One or more of the processing modules 8a to 8f may comprise a processor configured with a reduced instruction set computer (RISC) architecture.

Each processing module 8a to 8f comprises a microprocessor. One or more of the processing modules 8a to 8f may comprise a graphics processor in addition to the microprocessor. One or more processing modules may further comprise one or more interface blocks, for example for network connections or USB connections.

One or more of the processing modules is a low power processing module. For example, the processing module may be capable of performing less than or equal to 14,000 RSA-2k operations per second. The processing module may be capable of performing less than or equal to 10,000 RSA-2k operations per second. The processing module may be capable of performing less than or equal to 5,000 RSA-2k operations per second. The processing module may be capable of performing less than or equal to 1,000 RSA-2k operations per second.

Each processor in a processing module runs an operating system, for example a Linux operating system. The Linux operating system comprises system software that manages the hardware and software resources of the HSM device 11, and acts as an intermediary between programs (applications) and the HSM hardware. It is understood that the processors could support other operating systems.

In this example, one of the processing modules 8d is designated as a management processing module 8d.

The management processing module 8d is in wired bi-directional communication with the host interface component 17. The management processing module 8d is configured to receive user requests through host interface 17. The management processing module 8d accesses the interface 17. The interface 17 may be a single component or may comprise various components. The HSM 11 is coupled to the host device 4 through the host interface 17. The host interface 17 may comprise a communication port, which provides a PCI-e bus connection to the host device 4 for example.

The management processing module 8d is in wired bi-directional communication with each of the other processing modules 8a, 8b, 8c, 8e and 8f. For clarity in the figure, only the connections between a first processing module 8a and the management processing module 8d, and between a further processing module 8e and the management processing module 8d, are shown. However, it is understood that each processing module has such a connection. In one example, the interconnects between the management processing module 8d and the other processing modules are via a network interface, such as Ethernet. For example, an isolated network may be implemented behind management processing module 8d, with management processing module 8d relaying packets of data received through the host interface 17 to the other processing modules. In an alternative example, there is no designated management processing module, and a network is connected out to the host interface 17, so that packets of data are sent directly to the relevant processing module (rather than via a management processing module).

Each processing module 8a to 8f comprises Random Access Memory (RAM), in other words each processing module 8a to 8f has its own RAM instance. The RAM corresponds to working memory of the processors in the processing modules 8a to 8f. Each processing module 8a to 8f may comprise further working memory, including processor registers. For example, a processor in a processing module comprises its own registers and processor caches. These may be designated L1, L2 and L3 caches depending on their location within the die. Each processor may further comprise logic circuitry that responds to and processes the instructions in code stored in the working memory. When executed by one of the processors, a program is represented as a software product, or process, stored in working memory. Execution of various programs by one or more processors will cause methods as described herein to be implemented.

In this example, each processing module 8a to 8f further comprises a non-volatile storage. Each processing module 8a to 8fnon-volatile storage contains one or more of: unique identifiers for the HSM device 11 and/or for the processing module; program code (such as a bootloader, operating system and/or the HSM core program); and per processing module secret information. In one example, one or more public keys, such as a manufacturer public key or a public key of some other trusted party, are stored directly into the non-volatile storage in each processing module 8a to 8f. This key is then used to verify that code has been signed by the trusted party before it is executed on the processor. In this example, each processing module 8a to 8f comprises information uniquely identifying the processing module, and information proving the origin of the information identifying the processing module as being a trusted party - for example, this may comprise a digital signature which is generated using a manufacturer private key or the private key of some other trusted party. The information uniquely identifying the processing module and information proving the origin is together referred to as a warrant.

The processing module non-volatile memory may include any form of non-volatile device memory, such as flash for example. The non-volatile memory may be physically secure and may be resistant to tamper by a third party, for example by the inclusion of physical security such as a membrane that covers the entire device, that cannot be removed without destroying the underlying physical hardware, thus making it unusable. Additional security measures may be applied to the non-volatile memory, such as encryption of at least some of the data stored on the non-volatile memory for example. In this example, much of the data stored in the non-volatile memory of the processing module is held in either a form which is signed in such a way to guarantee integrity (this includes information such as the operating system for example) or encrypted in such a way to guarantee confidentiality (this includes information such as the warrant). Only any unique secret information used to sign or encrypt data is given further protection. Such protection measures may rely, at least in part, on information stored elsewhere within the HSM 11, for example on fuses or in a secure enclave on the silicon die on which the processing modules 8a to 8f are mounted. In one example, a unique piece of secret information is stored in the HSM 11, which is either a key, part of a key, or data which combined with other secret information (which may be located elsewhere in the HSM or on a separate device for example) may be put through a Key Derivation Function (KDF) to derive a key. This key is then able to unlock further encrypted data stored in the non-volatile storage, or able to sign data for example.

In this example, the HSM 11 further comprises a shared non-volatile storage 6. The management processing module 8d is in wired bi-directional communication with shared non-volatile storage 6. Other processing modules may also be in wired bi-directional communication with the shared non-volatile storage 6 in some examples, or they may access the shared non-volatile storage 6 through the management processing module 8d.

The shared non-volatile memory 6 may include any form of non-volatile device memory such as flash, optical disks or magnetic hard drives for example. The shared non-volatile memory 6 may again be physically secure and may be resistant to tamper by a third party, for example by the inclusion of physical security such as the membrane that covers the entire device. Additional security measures may again be applied to the shared non-volatile memory 6, such as encryption of at least some of the data stored on the shared non-volatile memory 6 for example. In this example, much of the data stored in the shared non-volatile memory 6 again is held in either a form which is signed in such a way to guarantee integrity (this includes information such as the operating system for example) or encrypted in such a way to guarantee confidentiality (this includes information such as system keys). Only the unique secret information used to sign or encrypt this data is then given further protection. Such protection measures may again rely, at least in part, on information stored elsewhere within the HSM 11, for example on fuses or in a secure enclave on the silicon die on which the processing modules 8a to 8f are mounted. In one example, a unique piece of secret information is stored in the HSM 11, which is either a key, part of a key, or data which combined with other secret information (which may be located elsewhere in the HSM or on a separate device for example) may be put through a Key Derivation Function (KDF) to derive a key. This key is then able to unlock further encrypted data stored in the shared non-volatile storage 6 or sign data for example.

In this example, the shared non-volatile storage 6 stores system data and per-container data.

The per-container data comprises information associated with a container. This is wrapped into a single file, also referred to as the container image. Various known formats for the files in the container image may be used, for example Docker V2 image manifest. One or more files each corresponding to a container are stored in the shared non-volatile memory 6 of the HSM device 11. In other words, the per-container data corresponds to one or more container images. When run, the container image becomes the container.

A container is an example of an isolated environment. The container isolates one or more running processes from the rest of the system. The container image comprises the program code corresponding to the programs to be run in the container (or a reference allowing the relevant program code to be retrieved). In this example, this includes the core program (or a reference to the core program) and an SSH server. The container image further comprises all libraries, supporting files and programs, and any language interpreter required to run these programs. This means that when the container is running, the programs may run without requiring access to files outside the container.

As described above, the per-container data includes the core program, or information identifying the core program used by the container.

The core program comprises computer instructions embodying a set of one or more cryptographic functions. For example, the core program comprises computer program instructions embodying one or more of the following cryptographic functions: cryptographic key generation; cryptographic key derivation; encryption; decryption; and digital signature functions (for example digital signing or validation of a digital signature). These programs are referred to as "core program", however generally the programs comprise a set of computer instructions stored in non-volatile memory on the HSM device 11 and embodying the functionality as described in relation to the "core program" herein. The computer instructions, or core program, may be written in any of a number of programming languages, and may be stored on the HSM device 11 as compiled code. A "core program process" refers to the program in execution, in other words it is a running instance of the core program. The core program can be embedded in the hardware security module 11 when manufactured, or can be provided, as a whole or in part, after manufacture. For instance, the core program can be introduced as a computer program product, which may be in the form of a download. Alternatively, modifications to existing core program can be made by an update, or plug-in. In order to enforce security, only software from a trusted party is accepted. Digital signing processes can be used to enforce this, and the software may be provided in a command through the host system device 4.

As described above, in some examples, the per-container data includes information identifying the core program used by the container. The information may identify the version of the core program to be used by the container, from a number of versions of the core program which are stored on the HSM device 11 in the system data on the shared non-volatile storage 6. For example, the system data on the shared non-volatile storage 6 may store a set of core program images, for example to provide different functionality or software versions. The per-container data may include a reference to the core program image to be used by the container. When run, the identified core program image is then loaded in the container. Alternatively, the information may comprise attributes of the core program, for example "latest version" - in this case, when the container is run, the latest version that matches the attributes will be retrieved. The HSM 11 may therefore have a "core program version library" in the system data on the shared non-volatile memory 6, which contains one copy of each supported core program version. The per-container data on the shared non-volatile memory 6 then indicates which version it is using, and this version is retrieved based on the indication and loaded into the container when it is run. The host system administrator has access to the core program version library and can add and/or remove core program versions from the library, thus administering the core program versions available to the clients and controlling which versions are available to clients.

The per-container data on the shared non-volatile memory 6 may also comprise information used to establish a secure connection. For example, the per-container data may comprise a private key from a public-private key pair - this is referred to as the second private key below. The per container data may further comprise a program for establishing the secure connection. For example, a Secure Shell (SSH) protocol may be used to provide a secure connection. The per-container data comprises an SSH server, together with an SSH key pair, which may be specific to the container for example. The SSH server is a program which uses the secure shell protocol to accept connections, and will be described in more detail below.

In this example, the container image does not comprise user secret information, for example user keys. The container image can be run for any user. In other words, one or more generic container images which are available for any user are stored in the shared non-volatile storage 6. When a client request is received, a container is launched on a processing module using the generic container image. Once running, the container is then provisioned with the client specific information, for example one or more master keys associated with the client, as a separate step.

In other examples however, the container image is associated with a specific client. When a client request is received, the container corresponding to the client is identified and launched on a processing module. In this case, the container image may also store one or more master keys associated with the client. The per-container data may also comprise information which is used to establish a secure connection with the specific client in this example - for example, a public key from a client public-private key pair, where the private key is accessible only to the corresponding client. This public key can be used to authenticate the client. The master keys may comprise a symmetric key used as a root for "application" keys, as will be described in more detail below.

Each container may also use its own encryption key, referred to here as the container key, to encrypt information stored in that container. The container key may encrypt the entire container file, or it may encrypt certain data within the container file, for example where the container is specific to a particular client, the container key may encrypt the one or more user master keys. The container key is stored in the hardware security module 11. For example, the container key may be stored in the system data in the shared non-volatile storage 6. In one example, the container key is split into a plurality of separate parts and the separate parts of the container key are stored in different components of the hardware security module 11. For example, the container key is split into three parts and each part of the container key stored in one of the system data in the shared non-volatile storage 6, the board support processor 10, and a non-volatile storage area of one of the processing modules 8a to 8f. The separate parts are combined in the working memory of the processing module when needed to access the container data, to form the final container key. Separating the container key into different parts makes it harder for the complete key to be extracted through physical disassembly of the HSM device 11.

The system data stored in the shared non-volatile storage 6 may comprise the serial number of the hardware security module, manufacturer's certificates and any keys associated with the manufacturer security keys for example. The system data further comprises bootloader and operating system images, for example as binary executables. In this example, the bootloader and operating system images are stored on shared non-volatile storage 6 and are network booted onto each processing module, with the management processing module 8d acting as a boot service, for example using a preboot execution environment (PXE) process. In other examples, the bootloader and operating system images may additionally or alternatively be stored on non-volatile storage on each processing module for example.

In this example, one or more of the processing modules 8a to 8f further comprises a security engine. For example, where the processing module is a chip, the processing module may comprise a security engine within the chip. For example, where the processing module is an NXP i.MX 8M, the processing module may comprise a security engine implemented on an application-specific integrated circuit (ASIC). Where the processing module is a Xilinx Zynq-7000 System on a Chip (SoC), the processing module may comprise a security engine implemented on a field-programmable gate array (FPGA). A Xilinx Zynq-7000 System on a Chip (SoC) combines a SoC and an FPGA into one device. The security engine may be a crypto co-processor. In some examples, the management processing module 8d does not comprise a crypto co-processor, whereas the other processing modules do comprise a crypto co-processor.

The crypto co-processor implements specific cryptographic operations directly in hardware. The crypto co-processor is configured to receive requests to perform one or more operations from the processor and to return to the processor the output of the operation. The processor is configured to off-load various operations to the crypto co-processor. The crypto co-processor is separate to the processor, but is included in the processing module with the processor, for example both are mounted on the same chip. The crypto co-processor is configured to perform certain operations in hardware, meaning that these operations may be performed more efficiently on the crypto co-processor than on the processor. Operations may be performed on the crypto co-processor concurrently with operations performed on the processor. The crypto co-processor may comprise an application specific integrated circuit (ASIC) or FPGA which has the specific operations efficiently implemented directly in hardware. In particular, an ASIC may comprise fixed logic circuitry configured to perform the operations, such that the operations are implemented directly in hardware. An FPGA may comprise programmable logic circuitry configured to perform the operations, such that the operations are implemented directly in hardware. In this example, each processing module 8a to 8f, other than the management processing module, comprises its own crypto co-processor. The processing modules 8a to 8f do not share a crypto processor.

The HSM device 11 further comprises a shared board support processor 10. The board support processor 10 is in wired bi-directional communication with each of the processing modules 8a to 8f. Although only the connection with the management processor 8d is shown in the figure for clarity, it is understood that each of the processing modules 8a to 8f may have such a connection. Board support processor 313 is configured to communicate with a plurality of on-board sensors, monitoring the operation of the processing modules 8a to 8f and the other hardware components of the hardware security module 11. The sensors may include but are not limited to CPU and/or board temperature sensors, voltage and/or current sensors. Optionally, a second board support processor may be included in the host device 4.

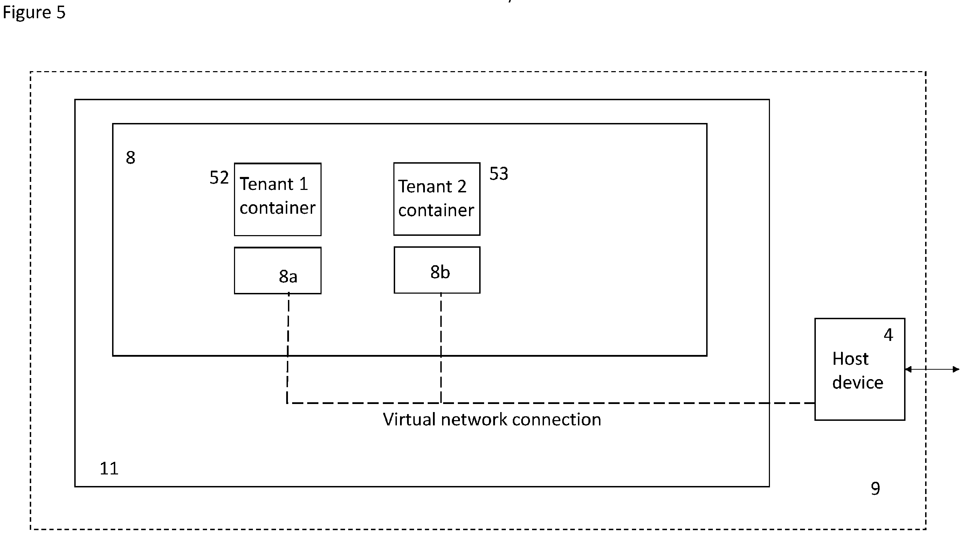

Figure 5 is a schematic illustration of the system in use. As illustrated, multiple containers are running on the HSM device 11, with each container being associated with a different client, and each container running on a different processing module. In particular, a first container 52 is associated with a first client "Tenant 1" and is running on a first processing module 8a. The first client "Tenant 1" uses the first client device 2. A second container 53 is associated with a second client "Tenant 2" and is running on a second processing module 8b. Each container comprises a set of one or more processes that are isolated from the rest of the system. Each container runs on a separate processing module.

When the first client wishes to use the HSM device 1, a request is sent from the first client device 2 to the host device 4. The host device 4 sends a request to the HSM device 1 to run a container on the first processing module 8a. A container engine process running on the first processing module 8a in HSM device 11 launches the first container 52. In this example, the management processing module 8d retrieves a container image from the shared non-volatile storage 6, and provides it to the container engine running on the first processing module 8a. The container engine then makes one or more API calls to the operating system kernel running on the first processing module 8a. The kernel enforces the network connections available to the first container 52. A network address of the first container 52 is then transmitted to the client device 2. In this manner, communication can be established by the client device 2 with the first container 52 through the host device 4 and the management processing module 8d using the network address of the first container 52. A secure connection may be established between the client device 12 and the first container 52.

Once the container 52 is running and the secure connection established, requests are sent from the client system 2. The requests correspond to performance of one or more cryptographic functions such as: cryptographic key generation; cryptographic key derivation; encryption; decryption and digital signature functions (for example digital signing or validation of a digital signature). The requests are generated using a communication protocol. The HSM device 11 runs the core program process inside the client container 52, which executes the commands given to it by the client, on the first processing module 8a.

In some scenarios, as well as sending requests to perform functionality provided by the core program, users are also able to provide code to the HSM device 11 embodying functionality which is not provided by the core program. The HSM device 11 will then execute the user code, optionally subject to some security checks, within the user container 52 on the first processing module 8a. Alternatively, a separate container may be run on a different processing module to run the user code, so that hardware separation is provided between the core program and the user code.

The HSM device 11 uses separate hardware components for different users, so as to mitigate against possible attempts by the mutually untrusted tenants to obtain each other's secret information. In the example of Figure 5, each user corresponds to a different processing module, having a different processor. Each of the first processing module 8a and the second processing module 8b runs a separate container. In this example, only a single container is run at one time on each processing module. Each processing module only has one tenant. A container can be run as and when needed, when a request from a client is received.

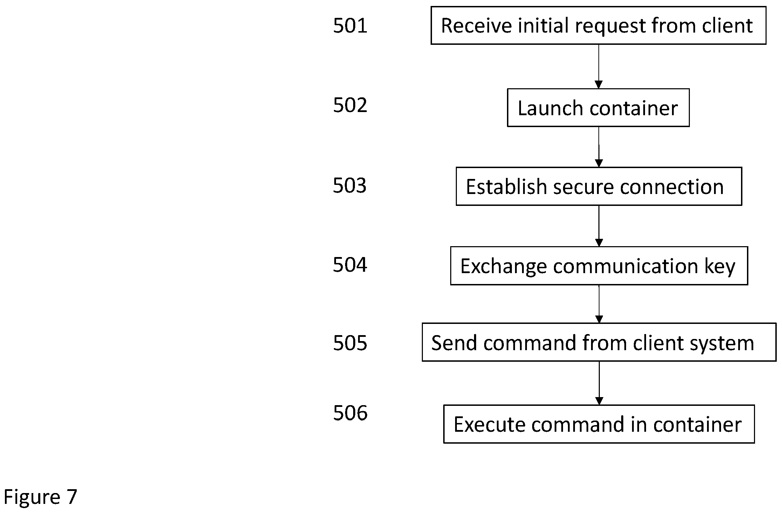

Figure 7 shows a flow chart of a method of communication using a hardware security module device in accordance with an embodiment. The method may be performed using a hardware security module device such as shown in Figures 4 and 5 above for example.

In step 501, an initial request is received from the first client system 2 at the device 4 in the host system 9. The initial request comprises information identifying the client 1. The host system device 4 stores a look-up table enabling the processing module in the HSM device 11 corresponding to a particular client to be identified. For example, the host system device 4 stores a look-up table, in which information identifying each registered client is associated with information identifying a corresponding processing module. The host system device 4 sends a request to the HSM device 11 to run a container on the processing module identified as corresponding to the client - in this case the first processing module 8a. This request comprises information identifying the processing module corresponding to the client. This request is received by the HSM 11 through the host interface 17, and directed to the management processing module 8d. The client may specify a particular container (for example corresponding to a particular version of the core program), in which case this is also specified in the request.

In step 502 a container is launched in the HSM device 11 on the identified processing module 8a. When the command to start a container on the identified processing module is received at the HSM device 11, a launcher program running on management processing module 8d receives the request and launches the container on the identified processing module. This involves providing a command to start the corresponding container to a container engine executing on the processing module. Various known container engines may be used. Examples of container engines include Docker, Linux LXC and Linux LXD. The management processing module 8d allocates the container image to the identified processing module. In this example, the container image is allocated to the first processing module 8a. The launcher program running on the management processing module 8d retrieves the container image from the shared non-volatile storage 6, and provides it to the first processing module 8a.

The container engine running on the first processing module 8a receives the container image, and makes one or more API calls to the operating system kernel running on the first processing module 8a. The kernel implements the isolation of the container, and enforces the network connections available to the container. The kernel, together with the memory management unit within the first processing module 8a, also allocates part of the RAM within the first processing module 8a to the container. The RAM is allocated to each container based on the resources required by the container in order to properly execute the corresponding core program process and other processes.

The files in the container image are loaded into the allocated section of the RAM. Where the core program is identified by a reference stored in the container image (rather than being part of the container image), the core program identified by the corresponding container image stored in the shared non-volatile memory 6 is loaded into the container. The indication of the core program version stored in the container image is used to obtain the core program version from a core program version library which is part of the system data, and the selected version of the core program is loaded into the container space in the RAM of the first processing module 8a by the container engine. Where the indication of the core program version comprises one or more attributes, rather than a reference to a specific version, a program provided by a trusted party and running on the HSM device 11 reviews the one or more attributes and selects the version of the core program stored in the system data which best matches the specified attributes. For example, client 1 can request that their container is running "the last version to support V2 Security Worlds" or "the latest version which is FIPS approved". A container corresponding to this request is then selected in response to the client request. When a new version of the core program is added to the core program version library by the host system administrator, the container will automatically comprise a core program process corresponding to the latest version of the core program if it matches the attributes.

The SSH server, together with the information for establishing the secure connection stored in the container image is also loaded into the container from the container image. In this example, information for establishing a secure connection with the client is then loaded into the container in a separate step. For example, the shared non-volatile storage 6 may comprise a public key corresponding to each client, which is retrieved using the information identifying the client in the initial request. Alternatively, the initial request may comprise the client public key.

As described above, in step 502, a launcher program running on the management processing module 8d of the HSM device 11 receives the request and launches the container. This involves providing a command to start the container to the container engine on the first processing module 8a, together with the container files. The container engine then makes one or more API calls to the operating system kernel. The container files are loaded into a part of the first processing module RAM corresponding to the container. This includes a secure connection process for establishing and communicating over a secure connection.

Once a container has been started, the launcher is configured to transmit to the client (via the host system device 4) information about the container allowing the client to connect to it, for example a network address of the container. This then allows a secure connection using the SSH protocol to be established with the container in step 503.

In this example, the HSM device 11 appears to the host system device 4 as if it is connected over a local-area network. When the container is started, the network address of the container is transmitted to the client device. In this manner, communication can be established by the client device with the container through the host system device 4 and the management processing module 8d using the network address of the container. Communication from the client device is sent to the host system device together with the network address of the container. The host system then uses the network address to route the communication to the container, via the management processing module 8d.

In step 503, a secure connection is established between the client system and the container running on the first processing module 8a. The secure connection is established by the secure connection process running in the container on the first processing module 8a, and a secure connection process running on the client system. The secure connection is established directly to the container running on the first processing module 8a within the HSM device 11. This means that the host system device 4 or management processing module 8d do not have to separate tunnel traffic and ensure that client commands are executed with the correct keys. An example process for establishing a secure connection will now be described. In this example, the secure connection is established using the SSH protocol.

A first SSH key pair comprises a first private key at the client system, and a first public key loaded into the container at the HSM 11. The SSH key pair comprises a first private key and a first public key. The client device stores the first private key, while the first public key is loaded into the container. The first SSH key pair allows the container to validate that the connection is terminated by the correct client. The first public key may be provided in the initial request in step 501, in which case an enrolment process is performed. Alternatively, the first public key may be retrieved from the shared non-volatile storage of the HSM using information identifying the client provided in the initial request in step 501.

Similarly, a second SSH key pair comprises a second private key stored with the container data. The second SSH key pair is also shared between the container and the client device. The second private key is stored with the container and the second public key is enrolled with the client device. The public half of the second SSH key pair may be validated by an identity key of the hardware security module device, which is unique to the hardware security module. For example, the second public key is first sent to the client device together with a certificate signed by the identity key. This certificate may specify further information such as the firmware version.

For example, the system data in the shared non-volatile storage 6 stores a manufacturer asymmetric key. The manufacturer may be a trusted party who manufactured the hardware security module. The system data in the shared non-volatile storage 6 also stores a unique asymmetric identity key. This key is generated in the factory when the HSM was manufactured for example, and may be used to prove the origin of data and authenticity. A key-generation certificate for the identity key may also be stored, which is signed using the manufacturer private key. The key generation certificate may describe the public parameters of the key, for example, the key generation certificate may include information relating to the type of the key, and its length. The key generation certificate comprises information which authenticates that the identity key was generated in the HSM device. For example, the key generation certificate may include a hash of the public half of the identity key, and be signed by the private half of the manufacturer key. The HSM can be verifiably identified using the signed key generation certificate generated at the time of manufacture. It is able to securely store its identity in a way that means it cannot be imitated.

The client system can use the public half of the manufacturer key as the root of trust to authenticate that the hardware security module is a genuine appliance. Furthermore, the parameters and state of the hardware security module can be validated in a non-repudiable manner through exchange of certificates signed by the identity private key or the manufacture private key. For example, an initial step of authenticating at the client that the identity key was generated in the processing module at the HSM device may be performed using the key generation certificate. As mentioned above, the public half of the second SSH key pair may be validated by an identity key of the hardware security module device, which is unique to the hardware security module. For example, the second public key is first sent to the client device together with a certificate signed by the identity key.

The client devices use the Secure Shell (SSH) protocol for communicating commands to the container running on the first processing module 8a in the hardware security module 11. Each client device comprises a SSH process, also referred to as an SSH client. This process is a running instance of a program which uses the secure shell protocol to connect to a remote device, in this case the container running on the first processing module 8a in the HSM device 11. The private half of the first SSH key pair is loaded into the memory space of the SSH process at the client device. The public half of the second SSH key pair is also loaded into the memory space of the SSH process at the client device.

The container running on the first processing module 8a also comprises a SSH process, also referred to as an SSH server. This process is a running instance of a program which uses the secure shell protocol to accept a connection from the client system. The private half of the second SSH key pair is loaded into the memory space of the SSH process running on the first processing module 8a. The public half of the first SSH key pair is also loaded into the memory space of the SSH process.

In 503, a request to establish the secure connection is transmitted from the client device to the container running on the first processing module 8a in the hardware security module 11, using the network address of the container provided in 502. The request comprises connection information. The connection information may include the client network address. It may further comprise information about the client identity, for example a username. Both the SSH client on the client device and the SSH server in the container running on the first processing module 8a have a corresponding network address. These are used by the host system, the management processing module 8d operating system and the first processing module 8a (on which the container is running) operating system to ensure the SSH protocol's messages are delivered to the expected processes. At least part of the connection information sent from the client to the container is signed with the first private key. For example, in the SSH protocol, the client network address is not signed with the first private key, while the content of the messages is signed with the first private key. The connection information may also include identification of a port number of the hardware security module 11, which is used to indicate the type of service of the hardware security module the client device is requesting. For example, the type of service of the hardware security module may be "administrative" or "main". "Main" service refers to the cryptographic functions performed by the hardware security module.

The connection information comprises information used to identify the container to which the request is directed, i.e. the network address of the container provided in 502. This information is used by the operating system running on the management processing module 8d, the operating system running on the first processing module 8a, and the operating system running on the host system to route the connection messages between the client device and the corresponding SSH process in the container running on the first processing module 8a.

The connection information is loaded into the memory space of the specified container running on the first processing module 8a. In particular, the connection information is loaded into the working memory on the first processing module, in the memory space of the SSH process in the specified container. The SSH process running in the container on the first processing module 8a validates the signature using the first public key. If the validation is successful, the container confirms that the connection between the client device and the corresponding container is validated. In other words, the container authenticates the client. If the signature is not validated, the connection is denied and an error message sent to the client system.

If the container confirms the connection, i.e. the client is authenticated, the container generates a response. The response includes the client network address so that it can be routed correctly. At least part of the response is signed with the second private key. For example, in the SSH protocol, the client network address is not signed with the second private key, while the content of the response is signed with the second private key. The response is transmitted from the HSM device 11 to the specified client system. The SSH process running in the client system validates the signature using the second public key. If the validation is successful, the client system confirms that the connection between the client device and the corresponding container is validated. If the signature is not validated, the connection is denied and an error message sent to the container.

If the connection is validated by both the container and the client system, a communication encryption key is then generated and exchanged between the container running on the first processing module 8a and the client system in step 504. For example, the client system may generate a symmetric key, encrypt the symmetric key with the second public key, and send the encrypted symmetric key to the container running on the first processing module 8a. The encrypted symmetric key is then loaded into working memory of the first processing module 8a, in the memory space of the SSH process running in the container, and decrypted using the second private key. The decrypted symmetric key is then stored in the container data on the first processing module 8a. Using a symmetric key for encrypting communications is more efficient than using the asymmetric key pairs. The symmetric key is then used to encrypt communications between the client system and the container.

The client secret information, comprising one or more application keys, is stored in an encrypted manner outside of the HSM. Once the secure connection is established, the client then enrols the container in a security world. This comprises loading one or more client master keys into the container. In order to load the master key, the client may be required to present various smart cards, on which the master key is stored, and optionally to input a passcode, validating the use of the smart card. The master keys associated with a client may be divided onto two or more smart cards, and in order to enrol the relevant container in the security world, more than one of the two or more client smart cards need to be presented to the container. The master key is combined with the warrant stored on the first processing module 8a. The encrypted client secret information, comprising one or more application keys, is then retrieved from the remote location. Information generated using the combination of the client master key and the first processing module warrant is then used to decrypt the client secret information (the one or more application keys), which are then stored in working memory on the first processing module ready for use. In other words, once the application keys are loaded to the container, the container is ready for use by the client.

Within each security world, admin cards and operator cards work as normal. For example, the admin cards may be presented to the hardware security module when the processing module 8a is first enrolled to the security world, while the operator cards may be associated with particular application keys. The container may require the presentation of operator cards in order to verify some operation with the associated application keys.

In other examples in which the container image is specific to the client, the one or more master keys are loaded from the container image.

The master key or keys define a "security world" associated with the client. The term "security world" refers to one or more security appliances (for example HSMs), or parts of a security appliance (for example containers or processing modules), which share at least one private key and are configured to safeguard cryptographic keys and perform a set of cryptographic functions. Once running, each container can belong to a different security world. Each processing module belongs to a different security world. Deployments with many security worlds can therefore run with fewer HSMs, as several security worlds can be condensed onto one HSM. The security worlds can be run at different times, when requested by different clients.

In this example, a master key associated with the client is loaded into the container and is used to retrieve client application keys. There are a number of cryptographic application keys associated with the client and for use with the cryptographic functions embodied in the core program process. In this example, the application keys are securely stored outside of the HSM device 11. In this example, the application keys associated with the client and for use with the core program cryptographic functions are encrypted and stored outside the HSM device 11 using information generated with a combination of the warrant and the master key. In this example, the user cryptographic application keys are stored in binary format outside of the HSM device 11. The application keys may be encrypted using the Advanced Encryption Standard (AES) for example. Alternatively, Triple-DES encryption may be used. Each application key may be associated with an Access Control List which is also encrypted. The application key and ACL are encrypted together and the result is signed with the client master key. This forms a "key blob". Encrypted and protected key blobs can be stored outside the HSM device 11, either on smart cards or server storage such as hard discs within the host system for example. When a client request is received, the application keys are retrieved using the client master key and the warrant, and loaded into the RAM space of the core program process on the processing module corresponding to the warrant.

The application keys associated with the client device are used to perform one or more cryptographic functions embodied in the core program process.

When the application keys are loaded into the container on the processing module, these are stored into the operating memory space of the core program process on the processing module. The application keys may be used to perform one or more functions, including performing various encryption and decryption operations, and performing digital signature operations. The application keys are retrieved using the client master key and warrant, and loaded into the container.

In 505, a command is sent from the client system to the hardware security module 11. In this example, the command corresponds to a cryptographic function embodied in the core program. The command is encrypted with the symmetric communication key. The message also comprises information specifying the container to which the command is directed, i.e. the network address. The encrypted command is loaded into the memory space of the specified container, in this case in the working memory of the first processing module 8a. In particular, the encrypted command is loaded into the memory space of the SSH process in the specified container. The command is decrypted using the symmetric key. The decrypted command is then loaded into the memory space of the core program process in the container, where the memory space is in the working memory of the first processing module 8a. The core program process executes the command in 506 on the first processing module 8a. If the command is not decrypted successfully, it is not passed to the core program process. In this step, program instructions in the core program corresponding to one or more of cryptographic key generation; cryptographic key derivation; encryption; decryption; or digital signature functions (for example digital signing or validation of a digital signature) are executed on the first processing module 8a. The program instructions may be executed using the application keys which were loaded into the memory space of the core program process on the first processing module 8a.

The HSM device 11 runs the core program process inside the container on the first processing module 8a, which executes the commands given to it by the client. For example, the host system receives a request from the client system over the secure connection in 505. The request corresponds to performance of one or more cryptographic functions such as: cryptographic key generation; cryptographic key derivation; encryption; decryption and digital signature functions (for example digital signing or validation of a digital signature). The requests are generated using a communication protocol. The request is routed to the container using the connection information.

In some instances, the core program process may require an additional level of authentication before it executes the command. For example, the core program process may require the client to present a smart card to the container and to input a passcode.

The output of the core program process is then passed to the SSH process. The output is encrypted with the symmetric key, and transmitted to the client system. For example, if the client has requested generation of a new cryptographic key, the response will comprise an identifier of the new cryptographic key. If the client has requested to use a cryptographic key to decrypt textual information, the response will comprise the decrypted text information. A client may also send a status check request and the response will confirm whether a command has been successfully executed or not.

Once running, the container is a set of one or more processes that are isolated from the rest of the system. The container engine comprises a set of program instructions that retrieve the container image in response to a command to start a container, and initiates and runs the container (the running processes) by making one or more API calls to the operation system kernel. The HSM device 11 runs the "core program process" inside the container. The containers, once running, each comprise the core program process associated with the individual client. The containers provide multiple copies of the supporting files and libraries required to run the core program process, providing good isolation. Furthermore, the containers run on different processing modules, meaning that the core program process associated with each client runs on a separate processor, and is therefore isolated in hardware. Each processing module runs its own copy of the core program process, running in the memory space of the individual processing module. In the event of a core program vulnerability which causes a leak of key data, e.g. through revealing uninitialized memory contents, only the key data visible to that particular instance of the core program process could be compromised. Each container is isolated from the others, and has limited and welldefined dependencies on anything outside the container. Furthermore, one or more containers corresponding to a first client are isolated in hardware from one or more containers corresponding to a second client. Separate hardware components run the core program process for different users, where each user corresponds to a different processing module, having a different processor and separate working memory.

Different versions of the core program may be used by different containers on different processing modules, since each container comprises the relevant supporting files and libraries needed to run the processes desired for that container. It will be possible for some clients to run old versions of the core program process, while others can run the latest version. The "core program" process running in each container does not need to be the same version of the code.

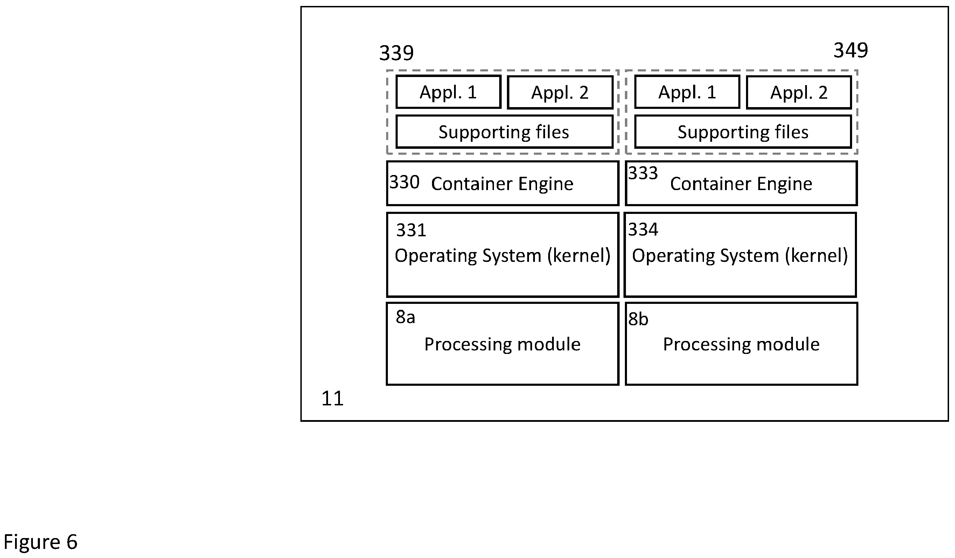

Figure 6 is a schematic illustration of two containers running on an HSM device 11. The figure shows a first operating system kernel 331 running on the first processing module 8a. A first container engine 330 runs on the first operating system kernel 331, and runs a first container 339. A second operating system kernel 334 runs on a second processing module 8b. A second container engine 333 runs on the second operating system kernel 334, and runs a second container 349. The first container 339 comprises application 1, application 2 and the supporting files for these applications. The second container 349 comprises application 1, application 2 and the supporting files for these applications. Furthermore, containers 339 and 349 run on different processing modules, and therefore use different operating system kernels, as shown in Figure 6. There is hardware isolation of the memory space in which the containers 339 and 349 are running, since the first container 339 and the second container 349 run on separate processing modules with separate working memory. Containers may be used with various operating systems, but they are compatible with the underlying operating system.

The secure connection between the container and the client system means that the host system administrator is unable to read or modify the command traffic between each client and the hardware security module. Furthermore, a client will be unable to read or modify the command traffic of another client, even in an event of network misconfiguration. The secure connection enables the client device to communicate with the hardware security module and vice versa without the security relying on the traffic being correctly directly between them. For example, if the HSM device 11 mistakenly sends data associated with client 1 to client 2, client 2 will not be able to access the data, since client 2 does not have the necessary information to decrypt the data. If the management processing module 8d in the HSM device 11 mistakenly sends a command from client 1 to a client 2 container, the client 2 container will not be able to access the command, since the client 2 container does not have the necessary information to decrypt the command. The command will therefore not be executed.

The secure channel allows for separation between the communication channels of different clients, as well as restricting the access of the host system administrator to the data being communicated between the client devices and the hardware security module 21. For example, a first container running on a first processing module 8a shares a communication key with client device 1 and a second container running on a second processing module 8b shares a communication key with client 2. The communication key allows the HSM containers to verify that commands sent to the first container are really sent by client 1. It is not possible for client 2 to send commands to exploit a vulnerability in core program running in the first container, since client 2 and the first container do not share the communication key. Furthermore, it is not possible for client 2 to simply send commands which make ordinary use of keys loaded in the first container, since client 2 and the first container do not share the communication key.

Role separation is provided between the host system roles (including network and hardware administration) and security administration roles, since each client retains control of keys and cards. Smart cards may be used to deliver a security world key, for example to a new HSM device joining the security world, to a new processing module joining the security world, or to a new container joining the security world. The key data is split onto several smart cards, and loaded from the smart card onto the HSM, the processing module, and/or into the container. Where a new container is joining the security world, the security world is associated with that container and not the HSM as a whole. The key is loaded from the smart card into the container using the secure tunnel. Furthermore, since the network traffic uses a secure tunnel, the host system has no access to commands and data.

When a new client wishes to enrol with the hardware security module, an enrolment process is performed. To ensure that the initial system setup is secure, and a man-inthe-middle cannot be established by the system administrator, the enrolment process is protected by 'certificates', signed by the unique identity key of the manufacturer of the module. The use of a manufacturer key to validate the enrolment ensures that the initial system setup is secure.

The client generates a first SSH key pair, comprising a first public key and a first private key. The first SSH key pair is associated with the client and identifies the client. The first public key is provided to the hardware security module 11. As described previously, the first public key may be provided as part of an initial request described in relation to step 501 above, in which case the below enrolment process is performed as part of the method described in relation to Figure 5. Alternatively, it may be provided in a separate enrolment procedure and stored in the shared non-volatile storage of the HSM 6 for later use.

Information identifying a processing module in the HSM 11 as a trusted device is sent to the client.

For example, the processing module in the hardware security module 11 stores a manufacturer asymmetric key. The manufacturer may be a trusted party who manufactured the hardware security module. The processing module also stores a unique asymmetric identity key. This key is generated in the factory when the HSM was manufactured for example, and may be used to prove the origin of data and authenticity.

A key-generation certificate for the identity key may also be stored, which is signed using the manufacturer private key. The key generation certificate may describe the public parameters of the key, for example, the key generation certificate may include information relating to the type of the key, and its length. The key generation certificate comprises information which authenticates that the identity key was generated in the processing module in the HSM device. For example, the key generation certificate may include a hash of the public half of the identity key, and be signed by the private half of the manufacturer key. The identity key and the key generation certificate may form the processing module warrant.

The processing module can be verifiably identified as a trusted device using the signed key generation certificate generated at the time of manufacture. It is able to securely store its identity in a way that means it cannot be imitated. The client system can use the public half of the manufacturer key as the root of trust to authenticate that the processing module in the hardware security module is a genuine appliance. Furthermore, the parameters and state of the processing module in the hardware security module can be validated in a non-repudiable manner through exchange of certificates signed by the identity private key or the manufacture private key.

For example, an initial step of authenticating at the client that the identity key was generated in the processing module at the HSM device may be performed using the key generation certificate. Access to the client application keys using the combination of the warrant and the client master key is then enabled.

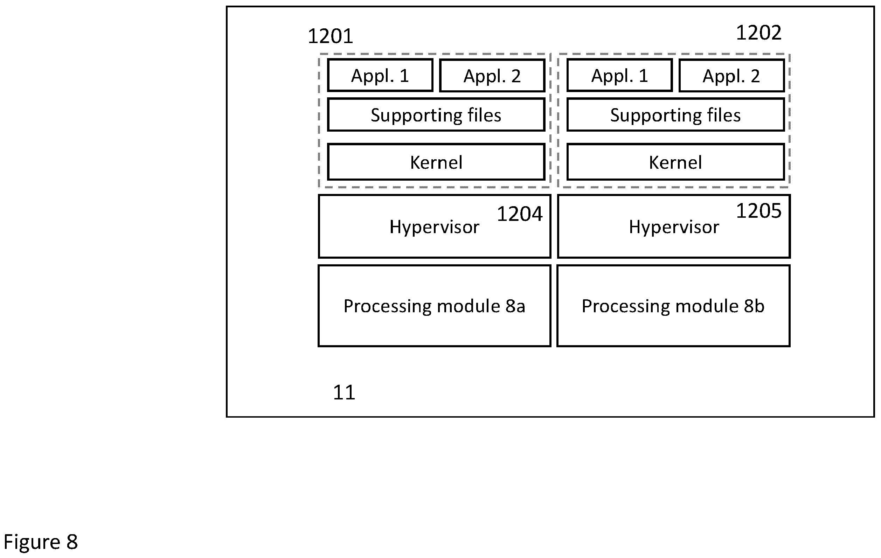

In the above description, the isolated environment is a container. However, alternatively the isolated environment may be a virtual machine for example. A schematic illustration of two virtual machines running on the HSM device 11 is shown in Figure 8. The virtual machine comprises a set of one or more processes that are isolated from the rest of the system. In this case, a separate kernel runs in each virtual machine. The first virtual machine 1201 comprises application 1, application 2, the supporting files for these applications and a kernel. The second virtual machine 1202 comprises application 1, application 2, the supporting files for these applications and a kernel. A hypervisor comprises software that creates and runs the virtual machine, and acts as an intermediary between the virtual machine and the HSM hardware. A first hypervisor 1204 runs on the first processing module 8a. The first virtual machine 1202 runs on the first hypervisor 1204. A second hypervisor 1205 runs on the second processing module 8b. The second virtual machine 1202 runs on the second hypervisor 1205. There is isolation of the memory space in which the virtual machines are running. Furthermore, the virtual machines run on different processing modules, and therefore use different hypervisors, as shown in Figure 9.

In the above description, an isolated environment which can be run for any user is provided. In other words, a generic container which is available to any user is provided. When a client request is received at the host system device 4, the generic container is launched on the processing module. Once running, the container is then provisioned with the client specific information, for example the client cryptographic keys or other information as a separate step. In other examples however, a container image is associated with a particular client. When a client request is received at the host system device 4, the container corresponding to the client is identified and launched on one of the processing modules.

In the above description, an isolated environment is run on each processing module. However, in other examples, isolated environments are not used. For example, the core program may be stored in the non-volatile memory of each processing module. The core program is then executed on the processing module in response to a client request.

In the HSM devices 11 described above, instead of sharing the resources of one or multiple processors or cores, each user is allocated their own processor. As each user is allocated a separate processing module, micro-architectural attacks on shared hardware components within a processor are mitigated. Each tenant uses a smaller processor, which they have exclusive use of whilst the corresponding isolated environment is running. As each tenant has a separate processor whilst the isolated environment is running, a security vulnerability whereby a software bug leaks secret information between two tenants in a system is mitigated. The system provides a level of hardware separation as well as software separation, giving a higher level of security. This allows a multi-tenant system to be implemented, with a higher level of security.

The HSM device 11 uses hardware separation, including separate processing modules, with software controlling the separation.

Multiple processing units can also offer a cost effective alternative to an approach in which a single large processor is used. Scaling up is possible as the system uses lower cost, smaller processing modules, meaning that many instances can be connected together to give the same performance as for a single, higher cost processor. Scaling up to high transaction volumes is possible using lower cost, smaller processing modules.

In the example described in relation to Figure 7 above, the user sends commands to the container running on the HSM device 11 over the secure connection to perform functionality provided by the core program. The core program process runs inside the container on the HSM device 21, and performs the functionality corresponding to the received commands. However, in some examples, users are able to provide code to the HSM device 1 embodying functionality which is not provided by the core program. The HSM device 1 will then execute the user code, optionally subject to some security checks, within the user container. Such a system allows a user to be able to execute custom code within the HSM device 11. As described above, as each user is allocated a separate processing module, micro-architectural attacks on shared hardware components within a processor are mitigated. As described above, the system provides a level of hardware separation rather than only software separation, giving a higher level of security, particularly when tenants are allowed to execute their own code on the HSMs, for example within a Secure Execution Environment. An example method of a user providing code for execution on a HSM device is described in EP3952202 - A DEVICE AND A METHOD FOR PERFORMING A CRYPTOGRAPHIC ALGORITHM, the entire contents of which are incorporated by reference herein. In particular, in step 505 in the example described above, a command is sent from the client system to the hardware security module 11, where the command corresponds to a cryptographic function embodied in the core program. In other examples, in step 505, first data comprising a representation of computer program code that embodies a cryptographic algorithm is sent from the client system to the container. This may be sent as part of a command or separately. The program is then executed within the container.

As each user is allocated a separate processing module, this allows Secure Execution Environments (SEEs), which are similar to software "sandboxes", to be implemented securely in a multi-tenant system for example. For example, an existing client can generate a new virtual machine in order to develop or test new program code in the HSM 1. For example, an existing client can set up a new virtual machine to act as a Secure Execution Environment (SEE). This runs on a processing module which is not used by any other tenant. The SEE can thus be implemented securely in a multi-tenant system. As they have their own hardware no software bug will leak secrets between two tenants in a system, thus it provides hardware separation as well as software separation, giving a higher level of security, particularly when tenants are allowed to be able to execute their own code on the HSMs within a Secure Execution Environment.

In the above described examples, the HSM device 11 is located in a host system 9. In some examples, the host system 9 is a service provider system, where a number of client devices connect to the service provider system over a communication network, for example the Internet. The HSM 11 services are offered by the service provider as a service, for example as Software as a Service to the clients. However, in alternative systems, the HSM is hosted in a client system, where a number of different client devices connect to the HSM through a device in the client system. In this case, the client system can be considered to be the host system. In such examples, the client controls the HSM.

In some examples, a single client may run multiple containers, each on a different processing module, where the containers act as Secure Execution Environments to execute client code. For example, a client may instruct the HSM to run a first container to execute the core program. The HSM then launches a first container on a first processing module, and executes the core program within the first container. The client may request to run their own code in a separate container to the first container. The HSM then launches a second container on a second processing module, and the client code is executed in the second container. In this manner, the client code is isolated from the core program. For example, the above described examples relate to a multi-tenant scenario. However, in some alternative examples, the HSM is used by a single client, where the different processing modules are used to execute different programs. Hardware isolation between the programs is therefore provided.

While certain embodiments have been described, these embodiments have been presented by way of example only, and are not intended to limit the scope of the inventions. Indeed the novel methods and apparatus described herein may be embodied in a variety of other forms; furthermore, various omissions, substitutions and changes in the form of methods and apparatus described herein may be made.

## Claims

1. A device, comprising:
an input; and
a plurality of processing modules, the plurality of processing modules comprising a first processing module and a second processing module, the device being configured to:
responsive to a first command received through the input, execute, on the first processing module, a cryptographic operation corresponding to the first command;
responsive to a second command received through the input, execute, on the second processing module, a cryptographic operation corresponding to the second command.

2. The device of claim 1, wherein the device is further configured to identify the first request as corresponding to a first user and identify the second request as corresponding to a second user.

3. The device according to claim 2, the device being further configured to:
responsive to a first request received through the input, run a first isolated environment on the first processing module and responsive to the first command, execute the cryptographic operation corresponding to the first command in the first isolated environment;
responsive to a second request received through the input, run a second isolated environment on the second processing module and responsive to the second command, execute the cryptographic operation corresponding to the second command in the second isolated environment.

4. The device of claim 3, wherein the device is further configured to:
establish a first secure connection with the first user in the first isolated environment and execute the operation corresponding to the first command responsive to receiving the first command over the first secure connection;
establish a second secure connection with the second user in the second isolated environment and execute the operation corresponding to the second command responsive to receiving the second command over the second secure connection.

5. The device of any preceding claim, wherein the device is further configured to receive a representation of computer program code that embodies a cryptographic algorithm, and wherein the operation corresponding to the second command comprises executing the program.

6. The device of any preceding claim, wherein the first processing module is an integrated circuit and the second processing module is an integrated circuit.

7. The device of claim 6, wherein the first processing module comprises a microprocessor and a random access memory (RAM) and the second processing module comprises a microprocessor and a random access memory (RAM).

8. The device of claim 7, wherein at least one of the first processing module or the second processing module comprises a field-programmable gate array FPGA or an application specific integrated circuit ASIC, and wherein at least one cryptographic operation is implemented directly in hardware in the ASIC or FPGA.

9. The device of any preceding claim, further comprising a non-volatile memory component, wherein the plurality of processing modules are configured to access the non-volatile memory component.

10. The device of claim 9, further comprising a third processing module, wherein the third processing module is configured as a management processing module.

11. The device of claim 10, wherein the third processing module is in wired bi-directional communication with the non-volatile memory component, and wherein the other processing modules of the plurality of processing modules access the non-volatile memory component through the third processing module.

12. The device of any preceding claim, wherein the first processing module and the second processing module use a Reduced Instruction Set Computer RISC microprocessor architecture.

13. The device of any preceding claim, wherein the first processing module and the second processing module comprise a system on a chip.

14. A method for performing a cryptographic operation on a device, the device comprising a plurality of processing modules, the plurality of processing modules comprising a first processing module and a second processing module, the method comprising:
responsive to a first command received through the input, executing, on the first processing module, a cryptographic operation corresponding to the first command;
responsive to a second command received through the input, executing, on the second processing module, a cryptographic operation corresponding to the second command.

15. A carrier medium comprising computer readable code configured to cause a computer to perform the method of claim 14.
